# EUROPÄISCHE PATENTSCHRIFT

(11) **EP 0 490 165 B1**
(45) Veröffentlichungstag und Bekanntmachung des Hinweises auf die Patenterteilung: **20.03.1996**
(21) Anmeldenummer: 91120190.3
(22) Anmeldetag: 26.11.1991
(51) Int. Cl.: B65D 1/38, B65D 1/48

(54) **Transportbehälter, insbesondere Flaschenkasten aus Kunststoff**
Transport container, especially plastic crate for bottles
Récipient de transport, notamment casier à bouteilles en matière plastique

(30) Priorität: 07.12.1990 DE 4039058
(43) Veröffentlichungstag der Anmeldung: 17.06.1992
(73) Patentinhaber: PEGUFORM-WERKE GmbH, D-37081 Göttingen (DE)
(72) Erfinder: Ternes, Bernd, Dipl.-Ing., W-3400 Göttingen (DE); Fuchs, Martin, W-3400 Göttingen (DE)
(74) Vertreter: Rehberg, Elmar, Dipl.-Ing.

(56) Entgegenhaltungen:
- EP-A- 0 260 698
- DE-A- 3 931 358
- PATENT ABSTRACTS OF JAPAN vol. 5, no. 99 (E-63)(771) 26. Juni 1981

## Beschreibung

Die Erfindung bezieht sich auf einen Transportbehälter, insbesondere Flaschenkasten, mit den im Oberbegriff des Anspruchs 1 angegebenen Merkmalen. Solche Transportbehälter werden als Kunststoff-Spritzformteile hergestellt. In der Ausbildung als Flaschenkasten weisen sie eine den Innenraum zwischen Boden und Seitenwandung aussteifende Gefachung auf, die sich z. B. bis etwa zur halben Höhe des Flaschenkastens erstreckt. Transportbehälter der angesprochenen Art werden z. B. auch als Fischkasten hergestellt, wobei der Boden und die Seitenwandung möglichst wenig unterbrochen sind, damit ein solcher Behälter auch zur Aufnahme von Stückeis, welches zur Kühlung der Fische dient, eingesetzt werden kann. Der Transportbehälter kann auch als Obststeige ausgebildet sein. In allen Fällen handelt es sich um ein kastenartiges Gebilde mit Boden und umlaufender Seitenwandung, welches nach oben offen gestaltet ist.

Ein Transportbehälter in seiner Ausbildung als Flaschenkasten ist aus der EP-A-260 698 bekannt. Bei solchen relativ großen Spritzformteilen ist die Gestaltung der Wandstärke besonders wichtig. Meist wird angestrebt, an allen Bereichen des Flaschenkastens etwa übereinstimmende Wandstärke zu haben, damit gleichmäßige örtliche Erstarrungszeiten resultieren und Einfallstellen am Flaschenkasten möglichst vermieden werden. Eine in allen Bereichen übereinstimmende Wandstärke ist jedoch für die festigkeitsmäßige Gestaltung und die sonstigen Handhabungseigenschaften eines solchen Flaschenkastens nicht optimal. So weist ein solcher Flaschenkasten, z. B. wenn er mit 20 vollen Flaschen gefüllt ist, ein erhebliches Gewicht auf, so daß relativ dünnwandig ausgebildete Tragegriffe, bei denen die Wandstärke in der Größenordnung von 2 bis 3 mm liegt, als unangenehm und unzureichend beim Ergreifen und Tragen des Flaschenkastens empfunden werden. Die Idealform eines Griffs würde durch einen voll massiv ausgebildeten Griff erreicht werden. Dies läßt sich jedoch gemäß EP-A-260 698 aus Gründen der erforderlichen Materialeinsparung bei aus Kunststoff gespritzten Flaschenkästen sinnvollerweise nicht realisieren. Bei einer voll massiven Ausbildung des Griffs wären auch Abkühlschwierigkeiten an einem solchen Flaschenkasten nach seiner Herstellung in der Spritzform zu erwarten, ganz abgesehen davon, daß ein voll ausgebildeter Handgriff zu einer entsprechenden Gewichtszunahme führen wurde, die gerade den Bestrebungen nach einer möglichst leichten Ausbildung des Flaschenkastens zuwiderlaufen.

Aus dem DE-U-18 16 670 ist ein Transportbehälter, insbesondere Flaschenkasten, mit den im Oberbegriff des Anspruchs 1 genannten Merkmalen bekannt. Der Transportbehälter besitzt einen Grundkörper aus gespritzem Kunststoff, in welchem Einlegeteile angeordnet sind. Diese Einlegeteile sind in einem separaten Formgebungsvorgang erzeugt und weisen in der Begrenzungsfläche des Grundkörpers endende Abstandsnoppen auf, mit deren Hilfe die Einlegeteile in der Spritzform des Grundkörpers lagegenau positioniert und während des Spritzens gehalten sind. Diese Einlegeteile dienen der Versteifung des Transportbehälters.

Der Erfindung liegt die Aufgabe zugrunde, einen Transportbehälter der eingangs beschriebenen Art bereitzustellen, der in einfacher Weise mit einer dauerhaften Codierung ausgestattet ist.

Der Transportbehälter der eingangs beschriebenen Art kennzeichnet sich erfindungsgemäß dadurch, daß die Abstandsnoppen zu Codierzwecken in der Begrenzungsfläche des Grundkörpers Zeilen- und/oder spaltenweise nebeneinander angeordnet sind und eine der Kennzeichnung dienende untereinander unterschiedliche Querschnittsgestaltung und/oder von der Farbe des Grundkörpers abweichende und untereinander unterschiedliche Farbgestaltung aufweisen.

Die Abstandsnoppen dienen somit nicht nur dazu, das Einlegeteil während des Umspritzens mit dem Kunststoff des Grundkörpers lagestabil in der Form zu positionieren und zu halten, sondern sie dienen auch gemäß ihrer speziellen Ausbildung in Gestalt und/oder Farbe der dauerhaften Codierung. Die Abstandsnoppen können an ihrem freien Ende etwa die Form eines Quadrats, eine elliptische oder kreuzartige Querschnittsgestaltung besitzen, wobei auch mehrere nebeneinander angeordnete Abstandsnoppen dann ein Kennzeichnungsmittel, z. B. für das Herstellungsdatum, den betreffenden Hersteller usw. des Transportbehälters abgeben können. Auch eine unterschiedlich farbige Gestaltung der Abstandsnoppen untereinander kann zu Kennzeichnungszwecken genutzt werden. Eine solche Codierung unter Verwendung eines in einem separaten Formgebungsvorgang erzeugten Einlegeteils behindert die Ausbildung unterschiedlicher Querschnitte, insbesondere Querschnittswandstärken in unterschiedlichen Bereichen am Transportbehälter nicht, so daß keinerlei Probleme hinsichtlich Schwindung und Kühlung bei der Formgebung des Transportbehälters auftreten. An solchen verdickten Stellen, wie z. B. im Tragebereich des Transportbehälters, wird der wesentliche Querschnittsanteil von dem Einlegeteil zur Verfügung gestellt, während der umspritzte Bereich des Einlegeteils etwa die Wandstärke aufweisen kann, die der Transportbehälter auch sonst besitzt. Damit ist es ohne weiteres möglich, z. B. im Bereich der Griffe den Querschnitt relativ groß und massiv auszubilden. Für die Herstellung des Einlegeteils mit den Abstandsnoppen kann auch vorteilhaft Kunststoffmaterial als Regenerat eingesetzt werden. Dabei ist eine vom Material des Grundkörpers abweichende Farbgestaltung bzw. Farbkomposition zwischen der Farbe des Einlegeteils mit seinen Abstandsnoppen und derjenigen des Grundkörpers keineswegs nachteilig, sondern verbessert die Erkennbarkeit der Codierung. Als Einlegeteile müssen nicht unbedingt massive Formkörper vorgeformt werden, sondern es ist auch möglich, Leichtbauteile, z. B. aus geschäumtem Kunststoff, zu verwenden.

Ein weiterer wesentlicher Vorteil des neuen Transportbehälters liegt darin, daß durch die Verwendung von Abstandsnoppen aufweisenden Einlegeteilen das Spritzwerkzeug oft einfacher gestaltet werden kann und sich damit erheblich verbilligt. Kompliziert ausgebildete und mit eigenen Antrieben versehene Kerne können an den entsprechenden Bereichen in Wegfall kommen.

Durch die vollquerschnittige Gestaltung in Verbindung mit dem Umspritzen werden auch Hohlräume vermieden. Solche verdeckt liegenden Hohlräume, die sich einerseits beim Durchlauf der Transportbehälter durch eine Waschanlage oft nur schwer reinigen lassen und die dann in der Folge als Ansiedlungsort für Bakterien in Betracht kommen, werden durch den Einsatz der Einlegeteile und der dann möglichen geschlossenen Gestaltung vermieden. Auch eine Wasserverschleppung aus der Waschanlage heraus tritt nicht mehr auf. Eine ohne Weiteres mögliche dickere Wandstärke kann in Verbindung mit der entsprechenden Ausbildung der Einlegeteile auch zu einer gewünschten Isolierwirkung führen, so daß z. B. in Fischkästen das Stückeis sich länger hält als in solchen Kästen ohne Isolierwirkung.

Das Einlegeteil mit den Abstandsnoppen kann vorzugsweise aus einem Formstück aus kompaktem, geschäumten oder geblasenem Kunststoff bestehen. Wichtig ist nur, daß eine ausreichende Verbindung zwischen der Oberfläche des Einlegeteils und dem Kunststoff des Grundkörpers eintritt. Sofern das Einlegeteil vollständig umspritzt wird, besteht hier keine Schwierigkeit. Im anderen Fall, d. h. bei nur teilweiser Umspritzung, sollten die Kunststoffe, sofern unterschiedliche Kunststoffe für Einlegeteil und Grundkörper eingesetzt werden, entsprechend aufeinander abgestimmt sein.

Das Einlegeteil mit den Abstandsnoppen kann so dimensioniert sein, daß der Grundkörper im umspritzten Bereich und im nicht mit einem Einlegeteil versehenen Bereich etwa übereinstimmende Wandstärke aufweist. Da das Einlegeteil vorgeformt ist, besitzt der Grundkörper - obwohl unterschiedliche Querschnitte insgesamt gestaltet werden - etwa nur übereinstimmende Wandstärke, so daß hieraus keine Abkühl- und Schwindungsschwierigkeiten entstehen, die nicht beherrschbar wären.

Die Erfindung wird anhand bevorzugter Ausführungsbeispiele weiter erläutert und beschrieben. Es zeigen:
- Figur 1: einen Querschnitt durch einen Teil des Transportbehälters, beispielsweise im Griffbereich,
- Figur 2: eine ähnliche Schnittdarstellung wie Figur 1, jedoch mit einem vollständig eingebetteten Einlegeteil,
- Figur 3: eine perspektivische Darstellung eines Einlegeteils in Rahmenform,
- Figur 4: eine perspektivische Darstellung eines Einlegeteils in Rahmenform mit im Eckbereich ausgeformten Holmen,
- Figur 5: eine schematisierte Querschnittsdarstellung eines Einlegeteils in der Spritzform,
- Figur 6: eine Schnittdarstellung eines Teils des Transportbehälters im Bereich des Einlegeteils gemäß Figur 5,
- Figur 7: eine Draufsicht auf ein Codierungsfeld in Verbindung mit einem Einlegeteil gemäß Figur 6,
- Figur 8: ein Einlegeteil, ähnlich Figur 6, jedoch nur auf drei Seiten umspritzt, und
- Figur 9: eine perspektivische Darstellung eines Transportbehälters mit Einlegeteilen.

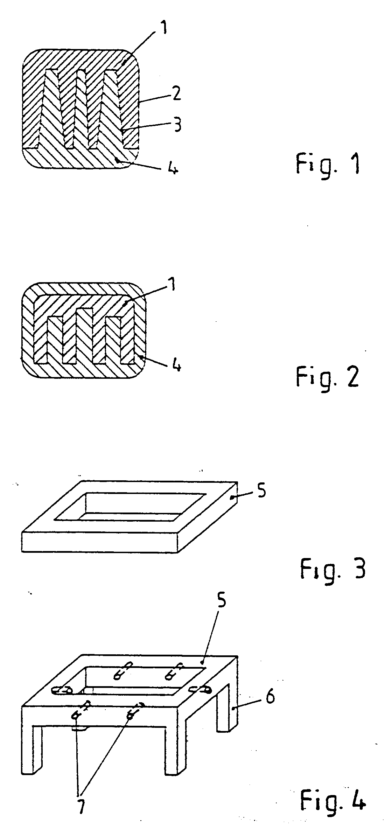

Der in Figur 1 dargestellte Querschnitt zeigt lediglich einen Bereich des Transportbehälters, und zwar insbesondere beispielsweise einen Querschnitt durch eine Griffleiste. Es wird ein kompaktes Einlegeteil 1 benutzt, welches auf seiner äußeren Oberfläche 2 glattflächig ausgebildet ist und entsprechend abgerundete Kanten aufweist. Dieses Einlegeteil 1 besitzt im Bereich seiner inneren Oberfläche 3 eine kammartige Ausbildung, wobei nicht nur Vertiefungen, sondern auch Hinterschneidungen, gebildet sein können. Die Formgebung ist so ausgebildet, daß hierdurch die innere Oberfläche 3 vergrößert wird. Das Einlegeteil 1 wird in dieser Form an der entsprechenden Stelle in die Spritzform für den Grundkörper des Transportbehälters eingebracht und es erfolgt das Einspritzen des Materials des Grundkörpers 4, also des Kunststoffs, der zum überwiegenden Teil letztlich den Transportbehälter bildet. Dabei dringt dieses Kunststoffmaterial in die Vertiefungen im Bereich der inneren Oberfläche 3 ein und füllt diese Vertiefungen aus, so daß eine gute Haftung zwischen Einlegeteil 1 und Grundkörper 4 erzielt wird, obwohl, wie ersichtlich, das Einlegeteil 1 nur auf einem Teil seiner Oberfläche umspritzt und damit nur einseitig eingebettet wird.

Figur 2 zeigt dagegen einen ähnlichen Schnitt wie Figur 1, jedoch mit vollständiger Einbettung des Einlegeteils 1 in dem Kunststoff des Grundkörpers 4. Hier wird die gesamte Oberfläche des Einlegeteils 1 von dem Material des Grundkörpers 4 umschlossen und eingebettet. Man erkennt, daß bei dieser Anordnung insbesondere Regenerat mit Vorteil für das Einlegeteil 1 benutzt werden kann. Auch die Verwendung von Kunststoffschaum für das Einlegeteil ist vorteilhaft möglich. Die Einlegeteile gemäß den Figuren 1 und 2 besitzen profilartige, langgestreckte Formgebung und erstrecken sich der Länge nach über den Bereich, über den sich z. B. auch der Tragegriff an dem Transportbehälter, insbesondere an dem Flaschenkasten, erstreckt.

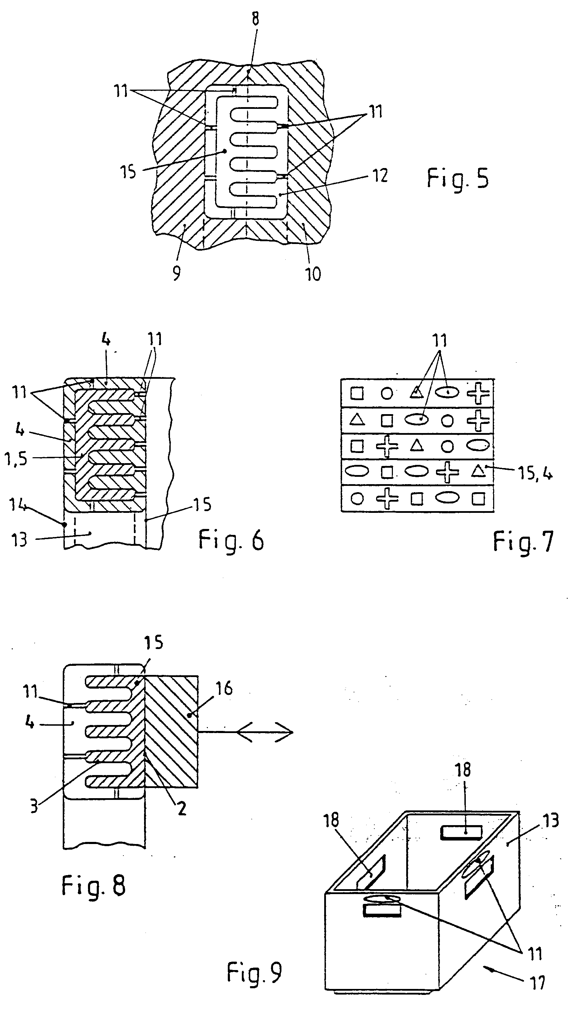

Wenn z. B. die Seitenwandung des Transportbehälters verstärkt werden soll, so findet ein rahmenartiges Einlegeteil 5 Verwendung, welches als umlaufender Körper vorgeformt ist. Gemäß Figur 4 kann ein solches rahmenartiges Einlegeteil insbesondere im Bereich der Ecken auch mit angeformten Holmen 6 versehen sein, so daß an dem rahmenartige Einlegeteil 5 im Bereich der Ecken Winkelstücke nach Art eines Dreibeins entstehen, die eine beachtliche Versteifungswirkung im Bereich des Transportbehälters erbringen. Insbesondere wird die Stapeldruckfestigkeit erheblich verbessert, so daß sich auch mit Ware befüllte Transportbehälter vergleichsweise hoch übereinanderstapeln lassen. Das Einlegeteil 5 kann auch mit Durchbrechungen 7 versehen sein, insbesondere dann, wenn eine vollständige Einbettung gemäß Figur 2 im Grundkörper 4 erzielt wird. Beim Spritzen des Grundkörpers bilden sich dann durch die Durchbrechungen 7 Verbindungsstege zwischen den inneren und äußeren Wandpartien des Materials des Grundkörpers 4 aus, durch welche diese Wandpartien auf Abstand gehalten und aneinander fixiert sind, so daß das Einlegeteil 5 selbst auch aus vergleichsweise weichem, nachgiebigem, z. B. geschäumtem Kunststoff bestehen kann.

Figur 5 verdeutlicht schematisch und in sehr vereinfachter Weise einen Bereich einer Spritzform für einen solchen Transportbehälter. Von der Spritzform ist nur ein Teil der beiden längs einer Trennfuge 8 aneinanderstoßender Formhälften 9 und 10 dargestellt. Das Einlegeteil 1 bzw. 5, von dem hier wiederum nur ein Griffbereich des Transportbehälters dargestellt ist, weist auf allen vier Seiten Abstandsnoppen 11 auf, mit deren Hilfe es lagestabil und positionsgenau in der geschlossenen Spritzform positioniert ist. Um das Einlegeteil 1 bzw. 5 herum befindet sich ein Hohlraum 12, in welchen das Material des Grundkörpers 4 eingespritzt wird. Nach der Entformung entsteht dann der Bereich des Tragegriffs des Flaschenkastens, wie er etwa anhand der Figur 6 verdeutlicht ist. Hier ist ein Bereich einer Seitenwandung 13 mit seiner Außenfläche 14 dargestellt. Man erkennt, daß die kammartige Ausbildung des Einlegeteils 1 bzw. 5 dem Innenraum des Transportbehälters zugekehrt angeordnet ist. Die zahlreichen, dem Innenraum zugekehrten Abstandsnoppen 11, die freilich auch auf der der Außenfläche 14 des Transportbehälters zugekehrten Seite angeordnet sein können, ergeben dann insgesamt ein Bild, wie es anhand der Figur 7 verdeutlicht ist. Es sind hier 25 in 5 Zeilen und 5 Reihen angeordnete Abstandsnoppen 11 erkennbar, die alle in der Innenfläche 15 der Seitenwandung 3 des Transportbehälters enden. Die einzelnen Abstandsnoppen 11 besitzen zumindest in ihrem freien Endbereich, also im Anschluß an die Innenfläche 15, eine jeweils unterschiedliche Querschnittsgestaltung, z. B. in Form des Quadrats, Kreises, Dreiecks, der Ellipse usw., so daß durch die Kombination und Aufeinanderfolge dieser unterschiedlichen Abstandsnoppen 11 eine Codierung für den Flaschenkasten vorgenommen werden kann, der beispielsweise Auskunft über den Hersteller, das Herstellerdatum, die Art des Kunststoffs usw. geben kann. Auch ist es möglich, die Einlegeteile 1 bzw. 5 mit den einzelnen Abstandsnoppen 11, die bei der Formgebung angeformt werden, aus im Vergleich zum Flaschenkasten unterschiedlich farbigem Kunststoff zu spritzen, so daß auch zusätzlich die Farbe neben ihrer dekorativen Funktion noch eine Kennzeichnungsfunktion haben kann.

Während die Ausführungsbeispiele 5, 6 und 7 mit Ausnahme der Abstandsnoppen 11 vollständige eingebettete Einlegeteile 1 bzw. 5 zeigen, verdeutlicht Figur 8, ähnlich Figur 1, daß auch nur ein teilweises Umspritzen des Einlegeteils 1 bzw. 5 mit dem Material des Grundkörpers 4 möglich ist. Von der Spritzform ist hier nur ein Schieber 16 dargestellt, der hier der äußeren Oberfläche 2 des Einlegeteils 1 bzs. 5 zugeordnet ist, während auf den drei anderen Seiten Abstandsnoppen 11 vorgesehen sind, um das Einlegeteil 1 bzw. 5 positionsgenau in der Spritzform während des Einspritzens des Kunststoffs des Grundkörpers 4 zu halten. Es ist auch möglich, als Einlegeteil 1 bzw. 5 ein Gummiteil zu benutzen und den Schieber 16 an der unteren Griffkante zu positionieren, so daß das Gummiteil an dieser Stelle nicht umspritzt wird. Dies verbessert die Haftung beim Tragen des Flaschenkastens.

Figur 9 verdeutlicht nochmals in stark schematisierter Weise einen Transportbehälter 17, z. B. als mehr oder weniger glattflächiger Flaschenkasten, der eine umlaufende Seitenwandung 13 aufweist, wobei im Bereich der Schmalseiten und der Längsseiten der Seitenwandung 13 vier Grifföffnungen 18 vorgesehen sind. Im Bereich oberhalb dieser Grifföffnungen 18 sind Griffpartien oder Griffleisten gebildet, und zwar durch Einlegeteile 11, wobei hier eine Formgebung und Anordnung jeweils verwirklicht werden kann, wie dies die Schnittdarstellungen der Figuren 1, 2 oder 5, 6 oder 8 zeigen. Es versteht sich, daß die Einlegeteile 11 nicht nur im Bereich der Grifföffnungen 18 vorgesehen sein können, sondern auch in großflächigerer Weise zur Verstärkung der Seitenwandung 13, im Bereich der Eckholme, also in den Ecken des Transportbehälters 17 oder auch im Bodenbereich.

## Patentansprüche

1. Transportbehälter, insbesondere Flaschenkasten, mit einem Grundkörper (4) aus gespritztem Kunststoff, der einen Boden, eine umlaufende, zumindest zwecks Ausbildung einer Grifföffnung (18) durchbrochene Seitenwandung (13) und ggf. eine den Innenraum zwischen Boden und Seitenwandung zumindest teilweise aussteifende Gefachung aufweist, wobei im Grundkörper (4) ein oder mehrere Einlegeteile (1) gant oder teilweise eingebettet sind, die in einem separaten Formgebungsvorgang erzeugt sind und in einer Begrenzungsfläche des Grundkörpers (4) endende Abstandsnoppen (11) für eine lagegenaue Positionierung beim Spritzen des Grundkörpers aufweisen, dadurch gekennzeichnet, daß die Abstandsnoppen (11) zu Codierzwecken in der Begrenzungsfläche des Grundkörpers (4) Zeilen- und/oder spaltenweise nebeneinander angeordnet sind und eine der Kennzeichnung dienende untereinander unterschiedliche Querschnittsgestaltung und/oder von der Farbe des Grundkörpers abweichende und untereinander unterschiedliche Farbgestaltung aufweisen.

2. Transportbehälter nach Anspruch 1, dadurch gekennzeichnet, daß das Einlegeteil (1 bzw. 5) mit den Abstandsnoppen (11) aus einem Formstück aus kompaktem, geschäumtem oder geblasenem Kunststoff besteht.

3. Transportbehälter nach Anspruch 1 oder 2, dadurch gekennzeichnet, daß das Einlegeteil (1 bzw. 5) mit den Abstandsnoppen (11) so dimensioniert ist, daß der Grundkörper (4) im umspritzten Bereich und im nicht mit einem Einlegeteil versehenen Bereich etwa übereinstimmende Wandstärke aufweist.

## Claims

1. Container, especially bottle box, with a basic body (4), out of injected plastics, with a bottom, a surrounding, at least for openings for handles (18) broken through side wall (18) and eventually an interior space between bottom and side wall with a folding, whereby the basic body (4) has one or more inlays (1) imbedded completely or partially, which are produced separately and have distance pieces (11) for an exact positioning while injecting the basic body (4), **wherein** the distance pieces (11) are arranged next to one another in lines or rows in the periphery of the basic body (4) for encoding and have different cross-sections and/or different colours compared to the colour of the basic body to serve identification.

2. Container according to claim 1, **wherein** the inlay (1 or 5) with the distance pieces (11) is made out of one piece of compact, foamed or blown plastics.

3. Container according to claim 1 or 2, **wherein** the inlay (1 or 5) with the distance pieces (11) is dimensioned in that way that the basic body in its injected around part and in its part without an inlay have about equal thickness of walls.

## Revendications

1. Récipient de transport en particulier casier à bouteilles, avec un corps de base (4) en matière plastique moulé par injection, qui comorte un fond, une paroi latérale (13) périphérique, percée au moins pour former une ouverture de prise (18) et éventuellement des cases renforçant au moins en partie le volume intérieur compris entre le fond et la paroi latérale, un ou plusieurs éléments d'insertion (1) étant enrobés totalement ou en partie dans le corps de base (4), lesquels éléments d'insertion sont produits au cours d'une opération de formage séparée et présentent des boutons d'écartement (11), se terminant dans une surface de délimitation du corps de base (4), pour un positionnement précis lors du moulage par injection du corps de base, caractérisé en ce que les boutons d'écartement (11) sont juxtaposés à des fins de codage dans la surface de délimitation du corps de base (4) et présentent une forme de section transversale différente l'une de l'autre, servant à l'identification et/ou une couleur différente l'une de l'autre, autre que la couleur du corps de base.

2. Récipient de transport selon la revenditation 1, caractérisé en ce que l'élément d'insertion 1 ou 5 avec les boutons d'écartement (11) est constitué d'une pièce de forme en matière plastique compacte, en mousse ou soufflée.

3. Récipient de transport selon la revendication 1 ou 2, caractérisé en ce que l'élément d'insertion 1 ou 5 avec les boutons d'écartement (11) a des dimensions telles que le corps de base (4) présente une épaisseur de paroi à peu près concordante, dans la zone couverte par injection et dans la zone non pourvue d'un élément d'insertion.
